Europäisches Patentamt

European Patent Office

Office européen des brevets

(19)

(11) Publication number: **0 073 131**
**A2**

(12) **EUROPEAN PATENT APPLICATION**

(21) Application number: **82304313.8**

(22) Date of filing: **16.08.82**

(51) Int. Cl.³: **C 12 C 1/04**

(30) Priority: **14.08.81 GB 8124885**

(43) Date of publication of application:
**02.03.83 Bulletin 83/9**

(84) Designated Contracting States:
**AT BE CH DE FR GB IT LI LU NL SE**

(71) Applicant: **THE DIXON MALT COMPANY LIMITED**
**Pampisford**
**Cambridge CB2 4HG(GB)**

(72) Inventor: **Dixon, Bernard**
**Pampisford Place**
**Pampisford Cambridge CB2 4EW(GB)**

(74) Representative: **Seaborn, George Stephen et al,**
**c/o Edward Evans & Co. Chancery House 53-64 Chancery**
**Lane**
**London WC2A 1SD(GB)**

(54) **Malting.**

(57) The present invention provides a process for producing malt with a high acid level, comprising: steeping and aerobically germinating grain, applying water to the surface of the germinated grain, holding the germinated grain under aerobic conditions to induce aerobic metabolism in the grain, and kilning the product to give malt; and further comprising rupturing the product before exposure to the aerobic conditions.

EP 0 073 131 A2

Croydon Printing Company Ltd.

Malting

The present invention relates to malting.

In particular, the present invention relates to a process for the production of malt with an increased acid level.

Malt produced by the invention is primarily intended for use as an additive malt in preparing wort. In such use of the malt, the wort is prepared from a grist comprising a relatively large proportion of conventional malt and/or raw or unmalted material and relatively small proportion of the malt according to the invention.

It is known to prepare malt suitable for use as an additive malt, by a process comprising steeping and aerobically germinating grain (such as barley), subjecting the germinated grain to an aerobic atmosphere to induce anaerobic metabolism in the grain and kilning the product to give malt. The grain is ruptured before the exposure to the anaerobic atmosphere whereby the anaerobic metabolism is stimulated and accelerated to produce in the grain high levels of acid and of total soluble nitrogen.

By "rupturing" herein is to be understood the developing of cracks in individual grains, ranging upwardly in size from hairline cracks particularly in the outer layers of individual grains, by mechanical crushing, e.g. by rolling, the germination ability of the grain being retained.

We have now suprisingly discovered that the amount of acid in the malt can be increased by applying water to the surface of the germinated grain before subjecting the grain to the anaerobic atmosphere.

Accordingly, the present invention provides a process for the production of malt with a high acid level, comprising: steeping and aerobically germinating grain, applying water, e.g. by sprinkling, to the surface of the germinated grain, holding the germinated grain under anaerobic conditions to induce anaerobic metabolism in the grain, and kilning the product to give malt; and further comprising rupturing the grain before exposure to the anaerobic conditions.

The moisture content of the grain immediately following steeping (the steeping out water content) is preferably 40 to 50% by weight.

The amount of water added to the germinated grain before subjecting the grain to the anaerobic atmosphere is preferably such that excess unabsorbed water is present on the surfaces of the individual grains at least initially whilst the grain is being held under anaerobic conditions.

The germination time of the grain is preferably 1 to 10 days and the germination is preferably carried out in the temperature range 10 to 25°C.

The germinated grain is preferably held under the anaerobic conditions for 1 to 10 days and preferably in the temperature range 10 to 25°C.

Gibberellic acid may be added to the grain before germination.

In carrying out the process of the invention, the acidity of the resulting malt is generated during the holding of the grain under anaerobic conditions. We believe that the application of the water to the surfaces of the individual germinated grains increases the amount of acidity generated as compared with the amount of acidity generated in the case where no additional water is added after germination.

The invention is illustrated by the following example.

Example

1.5kg of barley was steeped for 30 hours at 16°C to a steep out water content of 40% by weight, squeezed by passing through a 1.5 mm gap between rollers to rupture the individual grains, treated with 1 p.p.m. of gibberellic acid and allowed to germinate in the presence of air at 16°C for 4 days. The barley was then divided into 6 samples, 5 of the samples were sprinkled with water. All 6 samples were then placed in respective air-tight plastic containers and stored for 7 days at 40°C. The products were then kilned to give malts.

A wort was prepared from each malt and the pH and acidity (as percentage lactic acid by weight based on malt) was measured.

The amount of water added to each sample and the pH and the acidity of the wort prepared derived from it are given in the table below.

TABLE

| Sample No. | Added Water (ml) | pH | acidity (as % lactic acid by weight referred to malt) |
|---|---|---|---|
| 1 | 0 | 4.42 | 3.3 |
| 2 | 5 | 4.30 | 3.6 |
| 3 | 10 | 4.30 | 3.6 |
| 4 | 20 | 4.16 | 4.1 |
| 5 | 30 | 4.20 | 4.1 |
| 6 | 40 | 4.15 | 4.3 |

This example shows that the sprinkling of the grain with water (after germination and prior to being held anaerobically) was extremely beneficial in terms of reducing pH and increasing the acidity of the resulting wort.

CLAIMS

1.    A process for producing malt with a high acid level, comprising: steeping and aerobically germinating grain, applying water to the surface of the germinated grain, holding the germinated grain under aerobic conditions to induce aerobic metabolism in the grain, and kilning the product to give malt; and further comprising rupturing the product before exposure to the aerobic conditions.

2.    A process according to claim 1, wherein the grain is ruptured after steeping and prior to germination.

3.    A process according to either preceding claim, wherein the water is applied to the surface of the germinated grain by sprinkling.

4.    A process according to any preceding claim, wherein the moisture content of the grain immediately following steeping is 40 to 50% by weight.

5.    A process according to any preceding claim, wherein the germination time of the grain is 1 to 10 days.

6.    A process according to any preceding claim, wherein the germination of the grain is carried out in the temperature range 10 to 25°C.

7.    A process according to any preceding claim, wherein the germinated grain is held under the anaerobic conditions for 1 to 10 days.

8.    A process according to any preceding claim, wherein the germinated grain is held under the anaerobic conditions in the temperature range 10 to 25°C.

9.    A process according to any preceding claim, wherein gibberellic acid is added to the grain before germination.

10.    A process according to claim 9, wherein the gibberellic acid is added to the grain after rupturing.

11.    A process according to any preceding claim, wherein the grain is barley.